# EUROPEAN PATENT SPECIFICATION

(11) **EP 4 511 208 B1**
(45) Date of publication and mention of the grant of the patent: **07.10.2026**
(21) Application number: 23707370.5
(22) Date of filing: 24.02.2023
(51) Int. Cl.: B29C 49/20, B29C 49/06, B29C 49/02, B29C 49/24, B29L 31/00, B29C 49/04, B29C 49/10, B65D 1/02

(54) **METHOD OF PRODUCING ATTACHABLE CONTAINERS AND CONTAINERS SO PRODUCED**
VERFAHREN ZUR HERSTELLUNG VON AUFSETZBAREN BEHÄLTERN UND SO HERGESTELLTE BEHÄLTER
PROCÉDÉ DE PRODUCTION DE CONTENANTS POUVANT ÊTRE ATTACHÉS ET CONTENANTS AINSI PRODUITS

(30) Priority: 01.03.2022 SE 2250277
(43) Date of publication of application: 26.02.2025
(73) Proprietor: Borgert, Torbjörn, 791 62 Falun (SE)
(72) Inventor: Borgert, Torbjörn, 791 62 Falun (SE)
(74) Representative: Bjerkén Hynell KB
(86) International application number: PCT/EP2023/054694
(87) International publication number: WO 2023/165906

(56) References cited:
- WO-A1-2007/033723
- US-A- 3 334 771
- US-A1- 2010 147 198
- US-B1- 11 203 462

## Description

### TECHNICAL AREA

The present invention relates to containers for products for personal use and in particular containers that can be attached to each other for ease of handling.

### BACKGROUND OF INVENTION

There are many different products that persons use on a daily basis such as shampoo, conditioner, shower cream, body lotion, just to mention a few. These types of products are often sold in containers that function well when placed and stored stationary in bathrooms and toilets.

However, when traveling, these containers are usually too large and bulky, especially if several containers are brought along. Further, the restrictions regarding the amount of liquid that is allowed to be brought along in the cabin baggage when flying render them unsuitable due to the size.

A number of travelling containers have been developed having volumes that make them easy to bring along and also allowable in cabin baggage. A drawback with most of these containers is that they have to be filled by the user with the desired products and often the openings of these containers are quite small, which makes them difficult, cumbersome and messy to fill. Another drawback is that a bag or larger container is needed if several of these small containers are to be brought along, for instance in the shower or the gym.

Some solutions have been developed during the years for inter-connecting containers, forming a single unit that is easy to bring along. Some solutions comprise form-locking elements such as profiled protrusions that fit into corresponding recesses for making a detachable connection. Even if these solutions are functional, they are not very aesthetically appealing. Other solutions comprise magnets attached on outer surfaces of containers. One solution is disclosed in document US2015/0164003, describing a modular container system where each container is provided with a housing on a side surface. The housing is provided with magnets arranged in recesses. In order to attach one container to another, a separate element, called vessel connector, also containing magnets, is used to attach to both housings of the containers. This means that an extra component is needed, and if it is lost, the function of the container system is lost. Further, the protruding magnetic housing is not very appealing.

Document CN107972954 discloses boxes provided with magnetic elements on outer surfaces thereof for stacking. The document is silent regarding how the magnets are attached to the boxes. WO 2007/033723 A1, US 11 203 462 B1 and US 2010/147198 A1 essentially disclose methods of producing plastic containers, whereby the magnets are integrated in, and are attached to, the formed containers. US 3 334 771 A discloses insert blow moulding of plastic containers. There is thus room for improvement in this technical area.

### BRIEF DESCRIPTION OF INVENTION

The aim of the present invention is to provide an improved solution regarding containers that can be attached to each other. This aim is solved by the features of the independent patent claim 1. Preferable solutions of the invention form the subject of the dependent patent claims.

According to one aspect, a method of producing a plastic container is provided, comprising the steps of producing a base element, parison or preform, inserting magnets in a cavity of an open blow-moulding die, inserting the base element in the open blow-moulding die, closing the die and introducing air into the base element for forming the container in the die, whereby the magnets are integrated in, and are attached to, the formed container, wherein the magnets are placed in magnet holders, which magnet holders are inserted in the cavity, and wherein the magnet holders are made of the same material as the material of the preform.

With the method, magnets for inter-connecting several containers to each other are integrated in a very reliable and smooth way when forming the actual container without additional methods or adhesives for attaching them.

The magnet holders provide a very good bonding with the container, securely integrating the magnets in the container.

The result of the method is a container in accordance with claim 7.

In order to enhance the appearance of the container the method may further comprise the step of inserting at least one label in the cavity, whereby the at least one label is attached to the outer surface of the formed container. With this solution, there is no need for additional adhesives for attaching the label, it is only the material of the container during forming that provides the attachment.

According to another aspect of enhancing the appearance of the container, at least parts of the cavity may be structured for providing structured outer surfaces on the formed container. Further, in order to reduce the cost for producing moulding dies and for increasing the number of different structures on the formed container, the cavity may be arranged to accommodate inserts, which inserts are provided with structured surfaces. For changing the structures on the formed containers, it is then easy to replace one insert with a differently structured insert without having to change the whole moulding die.

Preferable methods for forming the container comprise injection blow moulding, extrusion blow moulding or stretch blow moulding.

The container produced with the method may be formed with two generally planar opposite side surfaces, in which side surfaces the magnets are integrated for attaching several containers side by side by the magnets of one container interacting with the magnets of a further container. Thus, several containers so produced may be releasably attached to each other in a very convenient and simple way.

The formed container may further comprise an opening formed by a threaded neck and with a closure attachable to the threaded neck. In this regard, the closure may comprise a tubular element arranged to fit into the neck of the container for stabilizing the neck. This is an advantage if the container is made of a rather soft material that enables a user to squeeze the content out of the container, without the risk of the neck being deformed by the closure during attachment thereof.

Preferably, the closure may comprise a lid for opening and closing a dispensing passage in the closure. And in order to prevent dripping, the lid may be provided with a first sealing element arranged to fit into the dispensing passage when the lid is closed. For additional security against dripping, the lid may be provided with a second sealing element in the form of an annular protrusion arranged to fit into a corresponding annular recess surrounding the dispensing passage. In order to facilitate dispensing of content, the dispensing passage may be provided with a flexible membrane, which membrane is provided with a slit that is openable upon pressure from a dispensing liquid in the container.

A production unit may also be provided, having a subunit that can produce a preform or a parison for placement in an open moulding die. The production unit further comprises a subunit that can pick magnets from a storage and place them in the open moulding die. The subunit may further comprise a storage of magnet holders that are moved to a position in which magnets may be attached to the holders before placing in the moulding die. The subunit for picking magnets may be a robot with gripping elements, where the robot may be movable both linearly and rotationally in order to position the magnets inside the open moulding die. The gripping elements may use vacuum suction for picking the magnets. Further, vacuum may also be used to hold the magnets inside the moulding die.

The production unit may further comprise a subunit with a robot that can pick labels from a storage and position them inside the open moulding die. The subunit for labels may use vacuum for picking up labels. The robot may be movable both linearly and rotationally in order to position labels in the open moulding die.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 schematically shows an example of a production process that can utilize the method according to the invention,
Fig. 2 schematically shows an example of placing different objects in a moulding die before forming a container,
Figs. 3 and 4 show an example of a magnet holder that may be used in the method according to the invention,
Fig. 5 shows an example of a container produced by the method according to the invention,
Figs. 6 and 7 schematically shows inserts that may be used in the method according to the invention, and
Figs. 8 and 9 shows an example of a closure to be attached to a container produced according to the invention.

### DETAILED DESCRIPTION OF THE INVENTION

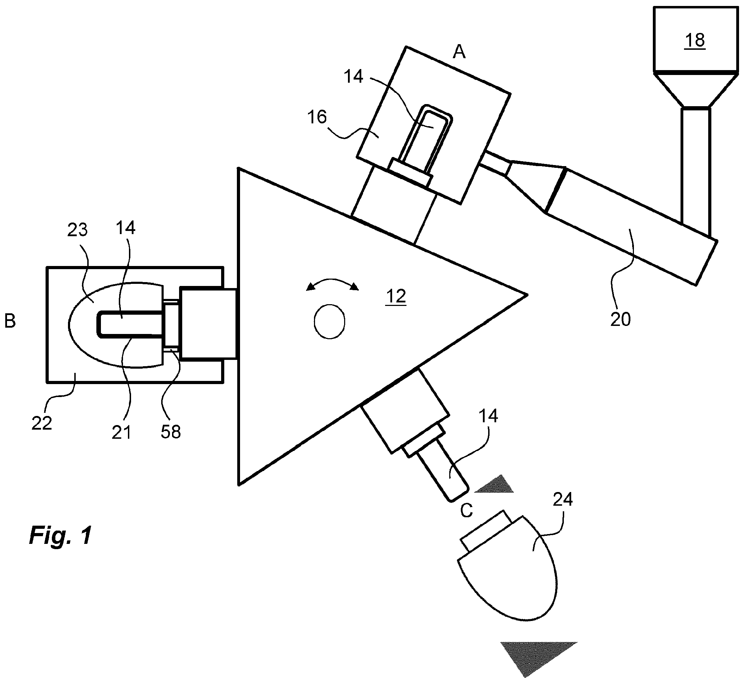

A method for producing containers will be described in the following. One example of production process is injection blow moulding. Fig. 1 schematically shows an injection blow moulding machine 10. It comprises a central turret 12 indexable in at least three stations. In the first station A, a core rod or metal shank 14 is positioned in an injection moulding die 16. Granulate material stored in a storage container 18 is melted and fed in an extruder 20 into the moulding die, forming a so called parison or preform 21. Preferably a neck portion is formed at the end of the preform, which could be threaded.

The injection moulding die 16 is then opened and the turret 12 is turned to the second station B with the preform 21 on the core rod 14. In the second station B, the preform is placed in a blow-moulding die 22, having a cavity 23 that is formed as the container to be produced. Air is introduced in channels in the core rod 14, which channels are provided with outlets whereby the preform is blown and expands or inflates to the surface of the cavity, forming a container 24. The blow-moulding die 22 is opened after the container is cooled and the turret 12 is turned with the formed container 24 to the third station C, at which the formed container is pushed off the core rod 14. Since the turret 12 is provided with three core rods, each step of the described process at all positions of the turret is performed, providing a continuous production process.

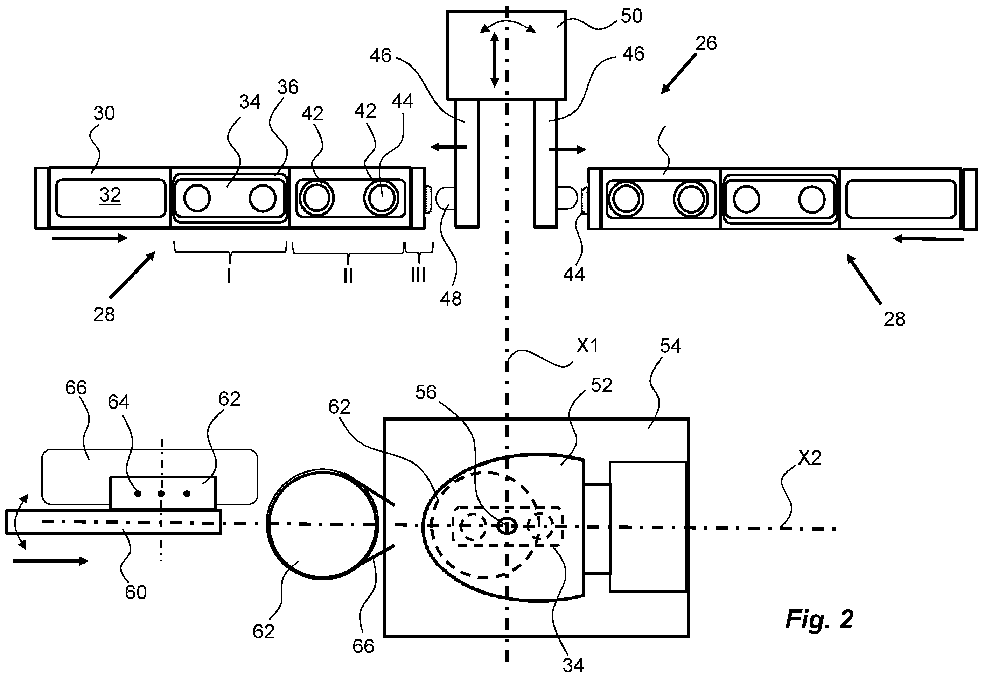

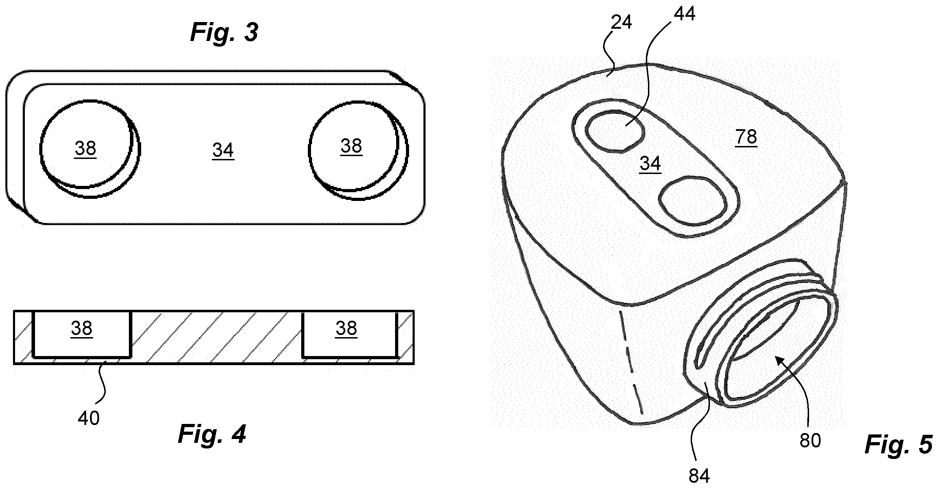

According to the present application, the machine further comprises a unit 26 that is arranged at the second station B for handling magnets. The unit 26 comprises two continuous movable bands 28 placed opposite each other as seen in Fig. 2. Each band 28 is divided in segments 30 where each segment comprises a recess 32 in which magnet holders 34 can be placed. The magnet holders 34 are placed in vertical racks 36 above the continuous bands. The magnet holders 34 are in the embodiment shown flat pieces of plastic with two recesses 38 having thin bottom layers 40, Figs. 3 and 4. Downstream of the rack 36 with magnet holders 34, two vertical racks 42 are arranged, in which magnets 44 are stored. In the embodiment shown, the magnets 44 are circular, whereby the racks 42 may be tubes with an appropriate inner diameter. Thus, for each band, a first a magnet holder 34 is placed in a recess 32 in a first position I. The band 28 is then moved to a second position II where a magnet holder 34 is positioned below the magnet racks 42, whereby a magnet 44 is introduced into each recess 38 of the magnet holder 34. The segment 30 with the magnet holder comprising magnets is then moved to a third position **III** where it is turned 90 degrees, for instance around a pully of the band 28.

The machine further comprises two robot arms 46 provided with gripping elements 48 that each can grip a magnet holder with magnets. The gripping elements 48 may be vacuum suction cups, or mechanical grippers. The two robot arms 46 are preferably provided on a common base 50 that is movable along an axis X1 in Fig. 2, and are individually movable in directions generally perpendicular to the axis X1. Thus, when picking magnet holders with magnets, the robot arms 46 are first moved towards the magnet holder in the third position III, where the gripping elements 48 grip the magnet holders 34. The base 50 and the arms 46 then move the magnet holders 34 along the axis X1 into cavities 52 in sections 54 of an open blow moulding die. In Fig. 2, only one section 54 is shown, but it is to be understood that a second section is positioned vertically above the shown section, with its cavity facing the cavity of the shown section. The robot arms 46 are preferably designed such that they can pass the core rod with the preform that is positioned between the die sections, not shown in Fig. 1 for clarity reasons.

In that position the base 50 with the robot arms 46 is turned 90 degrees around the axis X1 and then each arm 46 is moved perpendicular to the axis X1 towards a die section. The cavities 52 of the blow moulding die sections are provided with holding elements 56 that can hold the magnet holders 34 against the cavity wall of the moulding die section. The holding elements 56 may be orifices connected to a vacuum source. Once the magnet holders are in place as seen with dotted lines in Fig. 2, oriented such that the bottom layers 40 of the recesses 38 are facing the cavity wall, the moulding die is closed around the core rod. A cylindrical part of the core rod 14 fits into a tubular cavity section of the closed moulding die with an annular gap 58 between the core rod and the cavity section as seen in station B in Fig. 1, which forms a neck of the container to be produced. In that regard, the cavity section is preferably provided with recesses forming thread sections in the formed neck. Air from a source of pressurised air (not shown) is now introduced through the openings in the core rod into the die.

The parison or preform is then blown to expand to the surfaces of the cavity. The magnet holders 34 will then be covered by the blown material and adhered thereto by the heat in the die and the material. In this way, the magnets will be "integrated" into the blown container 24 and protected by the layers 40. Preferably the material of the magnet holders 34 is the same as the material of the container and also preferably have the same melting point in order to have a very good integration of the magnet holders and the magnets with the container. The blown container is after cooling moved from the moulding die and pushed off the core rod. An example of a container 24 is shown in Fig. 5.

In order to provide information on the container and/or to give the container a nice and individual appearance, the outer surfaces of the container may be provided with labels. These may be applied on the finished container but may also be attached during the form blowing process. In the latter case, a robot arm 60 is provided that is movable along an axis X2. The robot arm 60 is further provided with gripping elements. In the embodiment shown in Fig. 2, the gripping element comprises a cylindrical drum 62 that is rotatably attached to the robot arm 60. The drum 62 is provided with a plurality of orifices 64 connected to a vacuum source (not shown). A stack of labels 66 is placed adjacent the axis X2. In order to pick up a label 66, the robot arm 60 moves the drum 62 so that its outer periphery comes in contact with the uppermost label in the stack. The robot arm 60 is moved while the drum 62 is rotated, whereby the vacuum in the orifices 64 of the drum 62 will cause the label 66 to attach around the outer surface of the drum 62. The robot arm 60 then moves towards the open moulding die along the axis X2, rotates 90 degrees and moves the drum 62 into the open moulding die.

When the drum 62 is in position in relation to one of the die cavities, seen in dotted line in Fig. 2, the robot arm lowers the drum 62 so that it is positioned inside the die cavity 52 of the section 54. Vacuum is switched off, whereby the label 66 is released from the drum 62 and will unfold to be in contact with the surfaces of the cavity. Since the opening of the cavity is facing upwards, the label is standing in the cavity with one side edge resting on the lower cavity wall. In order to ascertain that the label is held in the proper position against the surfaces of the cavity, air can be used to blow on the label or vacuum may be used. When the moulding die is closed and the container is blow formed, its outer surface will come in contact with the label and due to the heat of the material of the container, the label will attach to the outer surface of the container. Thus, no glue or other sticky material than the material of the container is used to attach the label. The material of the label is chosen to both withstand the heat in the cavity as well as to provide a good adherence with the container.

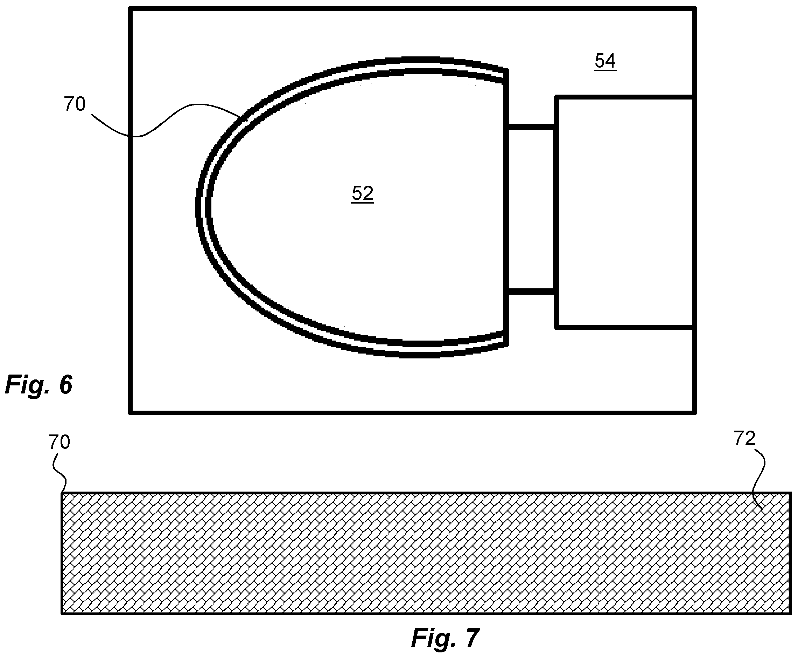

Another way of giving the container a nice appearance is to provide structures on the outer side of the container. The mould cavity can then of course be shaped such that a structure is provided. However, in order to have the possibility of providing many different structures, the mould cavity may be arranged to accommodate inserts 70, Fig. 6, with different structures 72. Fig. 7 shows an example of an inward surface of the insert 70. Suitable attachment elements may be provided to anchor the inserts inside the die cavity. In this way, containers with many different structures can be produced by using different inserts, without the large costs of manufacturing complete moulding dies with different internal structures.

The container is as mentioned preferably form blown. In this regard, apart from injection blow moulding, extrusion blow moulding or stretch blow moulding may be utilized. Further, there are of course other ways of introducing the magnets into the moulding die and also other ways of providing the magnets into the magnet holders.

The produced container 24 shown as an example in Fig. 5, is designed with two generally planar side surfaces 78, in which surfaces the magnets are embedded. In this way two or more containers may be attached to each other side by side by the magnets. The container 24 is further provided with an opening 80 with a neck 84 that preferably is threaded. The opening 80 has been chosen rather large in order to facilitate filling and re-filling of the container 24 by a user from a larger container without any tools such as funnels and without spilling and also large enough to be able to reach inside the container with a finger. The threads also provide attachment of a closure after filling and re-filling.

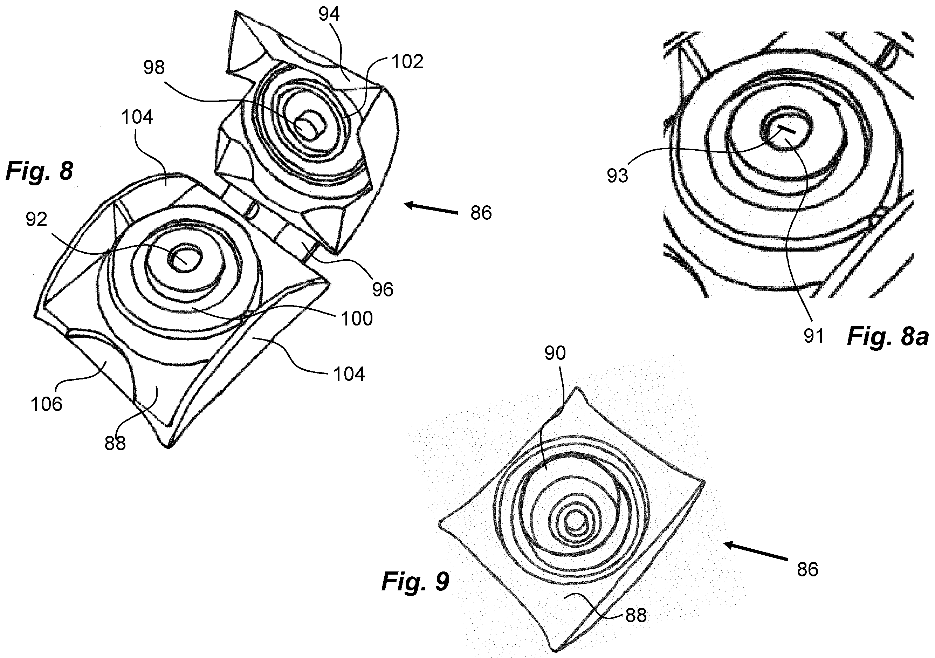

An example of a closure 86 of the opening is shown in Figs. 8 and 9. The closure 86 has a generally planar base 88. A central support tube 90 is integrated in the base 88, with an outer diameter generally corresponding to the inner diameter of the neck 84 of the container 24 for providing stability of the neck and preventing deformation inwards of the neck when the closure is screwed on. This is especially an advantage if the container is made of a rather soft material. Such soft material is preferred in order to be able to squeeze the content out of the container.

The base further is provided with a central passage 92 that preferably is smaller than the diameter of the neck. In order to provide a metered dosing function, the central passage may be provided with an elastic membrane 91 having a slit 93 that opens when liquid is pressed against the membrane, Fig. 8a. The closure is further preferably provided with a lid 94 that is hingedly attached to the base by living hinges 96. The inner surface of the lid 94 is preferably provided with a protrusion 98 having the same shape and dimension as the central passage 92 to fit therein and providing a sealing function when the lid is closed. The length of the protrusion is preferably chosen such that the end of the protrusion is in contact with the membrane 91, blocking the slit 93.

A further sealing function may be provided by an annular recess 100 in the base around the passage 92. The inner surface of the lid 94 is then arranged with an annular protrusion 102 with dimensions that fit into the recess 100 when the lid 94 is closed. Further, in order to prevent unintentional opening of the lid 94, walls 104 are provided on both sides of the lid such that the lid 94 is placed between the walls 104 when the lid 94 is closed. It is then only possible to open the lid 94 from the side of the lid opposite the hinges 96. A cut-out 106 may be provided on that side for a finger tip or a nail to open the lid 94.

As mentioned, the material of the container is preferably rather soft and a preferable material in this regard is an elastomer, which is suitable for form blowing and also has hygienic properties. However, it is of course to be understood that other types of plastic materials can be used for manufacturing a container according to the invention.

The container and the closure according to the application may be used for a number of liquids and products. One area is health and beauty with products like shampoo, hair conditioner, body lotion, liquid soap and such. With the present solution, it is easy to bring these products along on travels, to the gym and such. Another area is food stuff with products like ketchup, barbecue sauces, mustard, salad dressing, oil and vinegar, to mention a few. The solution is very convenient for outdoor adventures, picknicks and the like where you do not want to bring large containers with you. In this regard, the container could be filled with dishwashing liquids and other detergents. In short, only the imagination sets the limit of the products that the solution can be filled with.

It is to be understood that the embodiments described above and shown in the drawings are to be regarded only as non-limiting examples of the invention and that it may be modified in many ways within the scope of the patent claims.

## Claims

1. Method of producing a plastic container (24) comprising the steps of:
- producing a base element (21), parison or preform,
- inserting magnets (44) in a cavity (52) of an open blow-moulding die (54),
- inserting the base element in the open blow-moulding die,
- closing the die and introducing air into the base element for forming the container in the die, whereby the magnets are integrated in, and are attached to, the formed container,.
wherein the magnets (44) are placed in magnet holders (34), which magnet holders are inserted in the cavity,
and wherein the magnet holders are made of the same material as the material of the preform.

2. Method according to any of the preceding claims, further comprising the step of inserting at least one label (66) in the cavity, whereby the at least one label is attached to the outer surface of the formed container.

3. Method according to claim 2, wherein the label is inserted such that it is standing with one side edge resting against a cavity wall.

4. Method according to any of the preceding claims, wherein at least parts of the cavity are structured (72) for providing structured outer surfaces on the formed container.

5. Method according to claim 4, wherein the cavity is arranged to accommodate inserts (70), which inserts are provided with structured surfaces (72).

6. Method according to any of the preceding claims, wherein the container is formed by injection blow moulding, extrusion blow moulding or stretch blow moulding.

7. Container made by the method according to any of the claims 1 to 6.

8. Container according to claim 7, formed with two generally planar opposite side surfaces (78), in which side surfaces the magnets (44) are integrated for attaching several containers side by side by the magnets of one container interacting with the magnets of a further container.

9. Container according to claim 7 or 8, further comprising an opening (80) formed by a threaded neck (84).

## Patentansprüche

1. Verfahren zur Herstellung eines Kunststoffbehälters (24), umfassend die folgenden Schritte:
- Herstellen eines Basiselements (21), Vorformlings oder Rohlings,
- Einsetzen von Magneten (44) in einen Hohlraum (52) einer offenen Blasformdüse (54),
- Einsetzen des Basiselements in die offene Blasformdüse,
- Schließen der Düse und Einleiten von Luft in das Basiselement zum Formen des Behälters in der Düse, wodurch die Magnete in den geformten Behälter integriert und an diesem befestigt werden,
wobei Die Magnete (44) in Magnethaltern (34) angeordnet sind, welche Magnethaltern in den Hohlraum eingesetzt sind,
und wobei die Magnethaltern aus dem gleichen Material wie das Material der Vorform hergestellt sind.

2. Verfahren nach einem der vorhergehenden Ansprüche, ferner umfassend den Schritt des Einsetzens mindestens eines Etiketts (66) in den Hohlraum, wodurch das Etikett an der Außenfläche des geformten Behälters befestigt wird.

3. Verfahren nach Anspruch 2, wobei das Etikett so eingesetzt wird, dass es mit einer Seitenkante an einer Hohlraumwand anliegt.

4. Verfahren nach einem der vorhergehenden Ansprüche, wobei mindestens Teile des Hohlraums (72) strukturiert sind, um strukturierte Außenflächen am geformten Behälter zu erzeugen.

5. Verfahren nach Anspruch 4, wobei der Hohlraum zur Aufnahme von Einsätzen (70) ausgelegt ist, die mit strukturierten Oberflächen (72) versehen sind.

6. Verfahren nach einem der vorhergehenden Ansprüche, wobei der Behälter durch Spritzblasformen, Extrusionsblasformen oder Streckblasformen geformt wird.

7. Behälter, hergestellt nach dem Verfahren nach einem der Ansprüche 1 bis 6.

8. Behälter nach Anspruch 7, der mit zwei im Wesentlichen ebenen, gegenüberliegenden Seitenflächen (78) ausgebildet ist, in die die Magnete (44) integriert sind, um mehrere Behälter nebeneinander zu verbinden, indem die Magnete eines Behälters mit den Magneten eines weiteren Behälters interagieren.

9. Behälter nach Anspruch 7 oder 8, ferner umfassend eine Öffnung (80), die durch einen Gewindehals (84) gebildet wird.

## Revendications

1. Procédé de fabrication d'un récipient en plastique (24) comprenant les étapes suivantes:
- fabrication d'un élément de base (21), paraison ou préforme;
- insertion d'aimants (44) dans une cavité (52) d'une matrice de soufflage ouverte (54);
- insertion de l'élément de base dans la matrice de soufflage ouverte;
- fermeture de la matrice et injection d'air dans l'élément de base pour former le récipient, par lequel les aimants sont intégrés et fixés au récipient formé,
dans lequel les aimants (44) sont placés dans des supports d'aimants (34), lesquels supports sont insérés dans la cavité;
et dans lequel les supports d'aimants sont fabriqués du même matériau que celui de la préforme.

2. Procédé selon l'une quelconque des revendications précédentes, comprenant en outre l'étape d'insertion d'au moins une étiquette (66) dans la cavité, par lequel cette au moins une étiquette étant fixée à la surface extérieure du récipient formé.

3. Procédé selon la revendication 2, dans lequel l'étiquette est insérée de manière à ce qu'un de ses bords latéraux repose contre une paroi de la cavité.

4. Procédé selon l'une quelconque des revendications précédentes, dans lequel au moins certaines parties de la cavité sont structurées (72) afin de présenter des surfaces extérieures structurées sur le récipient formé.

5. Procédé selon la revendication 4, dans lequel la cavité est agencée pour recevoir des inserts (70), lesquels inserts sont dotés de surfaces structurées (72).

6. Procédé selon l'une quelconque des revendications précédentes, dans lequel le récipient est formé par moulage par injection-soufflage, moulage par extrusion-soufflage ou moulage par étirage-soufflage.

7. Récipient fabriqué selon le procédé selon l'une quelconque des revendications 1 à 6.

8. Récipient selon la revendication 7, comportant deux surfaces latérales opposées généralement planes (78), dans lesquelles des aimants (44) sont intégrés pour permettre l'assemblage de plusieurs récipients côte à côte par interaction des aimants d'un récipient avec ceux d'un autre.

9. Récipient selon la revendication 7 ou 8, comprenant en outre une ouverture (80) formée par un col fileté (84).
